# EUROPEAN PATENT APPLICATION

(11) **EP 2 487 824 A1**
(43) Date of publication of application: **15.08.2012**
(21) Application number: 11360009.2
(22) Date of filing: 14.02.2011
(51) Int. Cl.: H04L 1/18

(54) **Transmitting data packets between network nodes**

(71) Applicant: Alcatel Lucent, 75007 Paris (FR)
(72) Inventor: Phillips, Vincent Edward, Swindow SN3 4EH (GB)
(74) Representative: Leppard, Andrew John

(57) **Abstract**

A method of transmitting data packets between network nodes in a wireless telecommunications network utilising an acknowledge request protocol, a computer program product and a network node are disclosed. The method of transmitting data packets between network nodes in a wireless telecommunications network utilising an acknowledge request protocol in which consecutive transmission time intervals are provided for transmission of data packets, a plurality of the consecutive transmission time intervals forming a round trip time period, retransmission of a data packet occurring if an indication that a data packet was corrupted is received within the round trip time period, the acknowledge request protocol employing up to a predetermined number of acknowledgement request processes supporting transmission of data packets, each acknowledgement request process having an associated transmission time interval within which to transmit a data packet, comprises the steps of: determining a transmission requirement associated with the data packets; and allocating fewer than the predetermined number of the acknowledgement request processes in response to the transmission requirement to selectively prevent transmission time intervals within the round trip time period associated with non-allocated acknowledgement request processes from being allocated to support transmission of the data packets over the data channel. In this way, the effective maximum data rate of the channel supporting the data transmission is reduced or throttled back, based on the number of transmission time intervals utilized. By allocating fewer processes it is possible to reduce the effective bit rate on the channel and reduce the channel load which enables an increase in the number of network nodes which may transmit simultaneously over that channel.

## Description

### FIELD OF THE INVENTION

The present invention relates to a method of transmitting data packets between network nodes in a wireless telecommunications network utilising an acknowledge request protocol, a computer program product and a network node.

### BACKGROUND

Wireless telecommunications systems are known. In those known systems, radio coverage is provided to user equipment, for example mobile telephones, by geographical area. The required radio coverage in each geographical area may be provided by means of a radio coverage network which may comprise one or more base stations. User equipment located in a geographical area served by a base station receives information and data from the base station and transmits data and information to the base station.

In a High Speed Uplink Packet Access (HSUPA) telecommunications network, data and information is sent between user equipment and a base station in data packets on a radio frequency carrier. Data packets are typically sent in time intervals having a predetermined length. In known wireless telecommunications systems the transmit time intervals in an HSUPA network have a length of either 10 ms or 2 ms.

It will be understood that successfully sending a block of data of a given size in a shorter time interval enables more data to be sent over a given period. However, in order to successfully send a block of data of a given size in a shorter time interval it is necessary to ensure that a radio link is capable of supporting successful data transfer. It may be necessary to ensure that the Signal to Noise Interference Ratio (SNIR) on the radio frequency carrier is sufficient to enable the data to be decoded. In order to achieve a sufficient SNIR, telecommunications equipment (for example, a base station or an item of user equipment) will typically need to transmit the data packet on a radio frequency carrier at a higher power for a 2 ms transmission time interval than for a 10 ms transmission time interval.

In order to improve the reliability of the transmission of data between network nodes, it is known to employ an acknowledge request protocol in which data packets are transmitted in consecutive transmission time intervals. One known technique is a hybrid acknowledge request (HARQ) protocol in which data packets are transmitted in eight consecutive transmission time interval (TTIs)., forming a round trip time period (RTT). If a confirmation has been received that a previously transmitted data packet has been received within the round trip time period or should no indication be provided that the previously transmitted data packet was incorrect on receipt, then a further data packet may be transmitted or the corrupted data packet may be retransmitted.

Although this approach provides for increased reliability of the transmission of data packets between network nodes, such an approach has drawbacks. Accordingly, it is desired to provide an improved technique for transmitting data packets between network nodes.

### SUMMARY

According to a first aspect, there is provided a method of transmitting data packets between network nodes in a wireless telecommunications network utilising an acknowledge request protocol in which consecutive transmission time intervals are provided for transmission of data packets, a plurality of the consecutive transmission time intervals forming a round trip time period, retransmission of a data packet occurring if an indication that a data packet was corrupted is received within the round trip time period, the acknowledge request protocol employing up to a predetermined number of acknowledgement request processes supporting transmission of data packets, each acknowledgement request process having an associated transmission time interval within which to transmit a data packet, the method comprising the steps of: determining a transmission requirement associated with the data packets; and allocating fewer than the predetermined number of the acknowledgement request processes in response to the transmission requirement to selectively prevent transmission time intervals within the round trip time period associated with non-allocated acknowledgement request processes from being allocated to support transmission of the data packets over the data channel.

The first aspect recognizes that a problem with transmitting data packets between network nodes in accordance with an acknowledge request protocol is that more resources than may be necessary to support the transmission of those data packets may be allocated. In particular, an acknowledge request process for each transmission time interval within a round trip time period will typically be allocated to support transmission of data packets. Each allocated acknowledge request process consumes resources from the finite resources available within a network node. This can then lead to unnecessary constraints on resources in those network nodes. Also, the telecommunications network may then make assumptions on the likely interference that will be experienced due to transmissions that may be made by the allocated acknowledgement request processes which may lead to a pessimistic estimation of the likely interference.

Accordingly, a method of transmitting data packets between network nodes utilizing an acknowledge request protocol is provided. The acknowledge request protocol may employ up to a predetermined number of acknowledgement request processes supporting transmission of data packets and each acknowledgement request process may be designated to transmit within a corresponding transmission time interval of the round trip time period. The method may comprise a step of determining a transmission requirement for data packets to be transmitted. The method may also comprise a step of selectively allocating fewer than all the acknowledgement request processes associated with the round trip time period to avoid every transmission time interval within the round trip time period from being utilized to transmit data packets. In this way, it can be seen that the effective maximum data rate of the channel supporting the data transmission is reduced or throttled back, based on the number of transmission time intervals utilized. For example, halving the number of allocated processes will halve the number of transmission time intervals allocated within the round trip time period. This, in turn, halves the effective data rate of transmissions over the channel. However, this also reduces the resources required to be allocated within the network node and assumptions can be made that a reduced level of interference may be expected. In other words, by allocating fewer processes it is possible to reduce the effective bit rate on the channel and reduce the channel load which enables an increase in the number of network nodes which may transmit simultaneously over that channel.

In one embodiment, the step of allocating comprises: allocating fewer than the predetermined number of the acknowledgement request processes in response to the transmission requirement to prevent at least one of the consecutive transmission time intervals within the round trip time period being allocated to support transmission of the data packets over the data channel.

In one embodiment, the round trip time period comprises 'n' consecutive transmission time intervals and the step of allocating comprises: allocating no more than 'n-1' acknowledgement request processes in response to the transmission requirement provide no transmission on at least one of the 'n' transmission time intervals of the round trip time period.

In one embodiment, the round trip time period remains unchanged when allocating fewer than the predetermined number of the acknowledgement request processes. Accordingly, rather than reducing the round trip time period, the round trip time period remains constant, even when fewer transmission time intervals are utilised, to reduce the effective data rate of transmissions over the channel.

In one embodiment, the transmission requirement comprises a maximum bit rate for transmission of the data packets and the step of allocating comprises: allocating a number of the acknowledgement request processes determined to support transmission of the data packets over the data channel with at least the maximum bit rate. Accordingly, the allocation of processes may be determined based on a maximum bit rate required to be supported by the channel. Of course, the actual data rate of transmissions may at times be less than this maximum rate.

In one embodiment, the predetermined number of acknowledgement request processes comprises 'n' acknowledgement request processes operable to support a combined maximum bit rate 'm', each acknowledgement request process contributing 'm/n' of the combined maximum bit rate and step of allocating comprises: allocating a number of the acknowledgement request processes to support transmission determined to be that minimum integer number of acknowledgement request processes having a cumulative maximum bit rate greater or equal to the maximum bit rate. Hence, the number of processes determined to at least support that bit rate are allocated.

In one embodiment, the predetermined number of acknowledgement request processes comprises 'n' acknowledgement request processes operable to support a combined maximum bit rate 'm' for a predetermined data packet size, each acknowledgement request process contributing 'm/n' of the combined maximum bit rate and step of allocating comprises: allocating a number of the acknowledgement request processes to support transmission determined to be that minimum integer number of acknowledgement request processes having a cumulative maximum bit rate greater or equal to the maximum bit rate for that data packet size.

In one embodiment, the transmission requirement comprises a priority indicator for transmission of the data packets and the step of allocating comprises: allocating a number of the acknowledgement request processes determined to support transmission of the data packets over the data channel to achieve a priority requirement associated with the priority indicator. Accordingly, the number of processes allocated may also be determined based on a priority associated with the data to be transmitted. In this way, higher priority data may be allocated more processes in order to achieve a required priority level, whilst lower priority data may be allocated fewer processes.

In one embodiment, the step of allocating comprises: allocating the acknowledgement request processes in at least one of user equipment, a radio network controller, a serving base station and non-serving base stations in an active set.

In one embodiment, the acknowledge request protocol comprises one of a hybrid acknowledge request protocol and a simultaneous hybrid acknowledge request protocol.

According to a second aspect, there is provided a computer program product operable, when executed on a computer, to perform the method steps of the first aspect.

According to a third aspect, there is provided a network node operable to transmit data packets other network nodes in a wireless telecommunications network utilising an acknowledge request protocol in which consecutive transmission time intervals are provided for transmission of data packets, a plurality of the consecutive transmission time intervals forming a round trip time period, retransmission of a data packet occurring if an indication that a data packet was corrupted is received within the round trip time period, the acknowledge request protocol employing up to a predetermined number of acknowledgement request processes supporting transmission of data packets, each acknowledgement request process having an associated transmission time interval within which to transmit a data packet, the network node comprising: determining logic operable to determining a transmission requirement associated with the data packets; and allocation logic operable to allocate fewer than the predetermined number of the acknowledgement request processes in response to the transmission requirement to selectively prevent transmission time intervals within the round trip time period associated with non-allocated acknowledgement request processes from being allocated to support transmission of the data packets over the data channel.

In one embodiment, the allocation logic is operable to allocate less than the predetermined number of the acknowledgement request processes in response to the transmission requirement to prevent at least one of the consecutive transmission time intervals within the round trip time period being allocated to support transmission of the data packets over the data channel.

In one embodiment, the round trip time period comprises 'n' consecutive transmission time intervals and the allocation logic is operable to allocate no more than 'n-1' acknowledgement request processes in response to the transmission requirement provide no transmission on at least one of the 'n' transmission time intervals of the round trip time period.

In one embodiment, the round trip time period remains unchanged when allocating fewer than the predetermined number of the acknowledgement request processes.

In one embodiment, the transmission requirement comprises a maximum bit rate for transmission of the data packets and the allocation logic is operable to allocate a number of the acknowledgement request processes determined to support transmission of the data packets over the data channel with at least the maximum bit rate.

In one embodiment, the predetermined number of acknowledgement request processes comprises 'n' acknowledgement request processes operable to support a combined maximum bit rate 'm', each acknowledgement request process contributing 'm/n' of the combined maximum bit rate and the allocation logic is operable to allocate a number of the acknowledgement request processes to support transmission determined to be that minimum integer number of acknowledgement request processes having a cumulative maximum bit rate greater or equal to the maximum bit rate.

In one embodiment, the predetermined number of acknowledgement request processes comprises 'n' acknowledgement request processes operable to support a combined maximum bit rate 'm' for a predetermined data packet size, each acknowledgement request process contributing 'm/n' of the combined maximum bit rate and the allocation logic is operable to allocate a number of the acknowledgement request processes to support transmission determined to be that minimum integer number of acknowledgement request processes having a cumulative maximum bit rate greater or equal to the maximum bit rate for that data packet size.

In one embodiment, the transmission requirement comprises a priority indicator for transmission of the data packets and the allocation logic is operable to allocate a number of the acknowledgement request processes determined to support transmission of the data packets over the data channel to achieve a priority requirement associated with the priority indicator.

In one embodiment, the allocation logic is operable to allocate the acknowledgement request processes in at least one of user equipment, a radio network controller, a serving base station and non-serving base stations in an active set.

In one embodiment, the acknowledge request protocol comprises one of a hybrid acknowledge request protocol and a simultaneous hybrid acknowledge request protocol.

In one embodiment, the network node comprises one of a radio network controller and a base station.

Further particular and preferred aspects of the present invention are set out in the accompanying independent and dependent claims. Features of the dependent claims may be combined with features of the independent claims as appropriate and in combinations other than those explicitly set out in the claims.

### BRIEF DESCRIPTION OF THE DRAWINGS

Embodiments of the present invention will now be described further, with reference to the drawings in which:
Figure 1 illustrates the main components of a telecommunications network according to one embodiment;
Figure 2 illustrates schematically an example data transmission acknowledgement protocol;
Figure 3 illustrates schematically a data transmission regime using the data transmission acknowledgement protocol of Figure 2; and
Figure 4 is a message sequence diagram illustrating the interaction between network nodes when allocating HARQ processes.

### DESCRIPTION OF THE EMBODIMENTS

### Overview

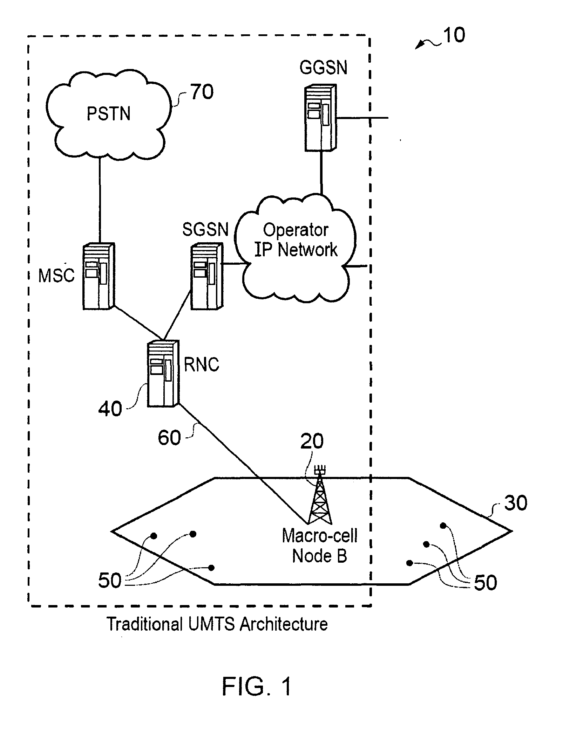

Figure 1 illustrates a wireless telecommunications network 10 according to one embodiment. User equipment 50 roam through the wireless telecommunications network 10. Base stations 20 are provided which support areas of radio coverage 30. A number of such base stations 20 are provided and distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless telecommunications network is managed by a radio network controller (RNC) 40. The radio network controller 40 controls operation of the wireless telecommunications network by communicating with a plurality of base stations over a backhaul communications link 60. The radio network controller 40 also communicates with user equipment 50 via each base station and thus effectively manages a region of the entire wireless telecommunications network.

The radio network controller 40 maintains a neighbour list which includes information about geographical relationships between sectors supported by base stations 20. In addition, the RNC 40 maintains location information which provides information on the location of user equipment 50 within the wireless telecommunications network 10. The RNC 40 is operable to route traffic via circuit switched and packet switched networks. Hence a mobile switching centre is provided with which the RNC 40 may communicate. The mobile switching centre can communicate with a circuit switched network such as a public switched telephone network (PSTN) 70. Similarly a network controller can communicate with servicing general packet radio service support nodes (SGSN's) and a gateway general packet radio service support node (GGSN). The GGSN can communicate with a packet switched core such as for example, the Internet.

User equipment 50 typically transmits information and data to a base station 20 so that it can be re-routed within the wireless telecommunications network. User equipment 50 may, for example, need to transmit data to the base station 20 in order to relay text messages or voice information when a user is using the user equipment 50 to make a telephone call, or to transmit other data. The base station 20, allocates resources to user equipment 50 using parameters sent by the radio network controller 40 in a manner that aims to optimise operation of the wireless telecommunications network 10.

### Active Sets

There will be regions within the wireless telecommunications network 10 where radio coverage regions provided by base stations overlap. User equipment 50 is operable to measure the strength of pilot signals transmitted by base stations. From these pilot signals it is possible for the user equipment 50 to determine the base station which primarily serves the user equipment 50 and those other base stations which are likely to be able to also receive transmissions from the user equipment 50. Those base stations will be placed, on the basis of measurement reports made by the user equipment 50, by the RNC 40 in that user equipment's "active set". The active set of any given user equipment is a list of base stations which have an active radio link with user equipment 50. It will be understood that transmissions made by the user equipment 50 may therefore be received by other base stations in addition to, or instead of, the primary serving base station. Data packets received by the base stations in the active set may be combined at a higher level in the wireless telecommunications network 10. It will thus be understood that by utilising those base stations in a user equipment's "active set", various modes of processing gain may be utilised and that higher overall data throughput from the user equipment 50 may be achieved.

### Transmission Time Intervals (TTIs)

In a high speed up link packet access (HSUPA) telecommunications network, data and information is sent between user equipment and a base station in data packets on a radio frequency carrier. Packets of data are sent in time blocks of predetermined lengths. In known wireless telecommunications systems, the available time blocks have a length of 10ms or 2ms. Those time blocks are known as data block transmit time intervals (TTIs).

It will be understood that successfully sending a block of data of a given size in a shorter time block (TTI) enables more data to be sent over a given period. However, in order to successfully send a block of data of a given size in a shorter time block, it is necessary to ensure that signal to noise and interference ratio (SNIR) on the radio frequency carrier is sufficient. In order to achieve a sufficient SNIR, telecommunications equipment (i.e. a base station 20 or an item of user equipment 50) will typically need to transmit the data packet on a radio carrier at a higher power for a 2ms transmit time internal than for a 10ms transmit time interval. The transmission power available to a base station 20 or user equipment 50 may be limited, for example, to ensure signals are sent at power level deemed safe for operation, or because a limited amount of power is available from a power source.

### Hybrid Automatic Repeat Request (HARQ)

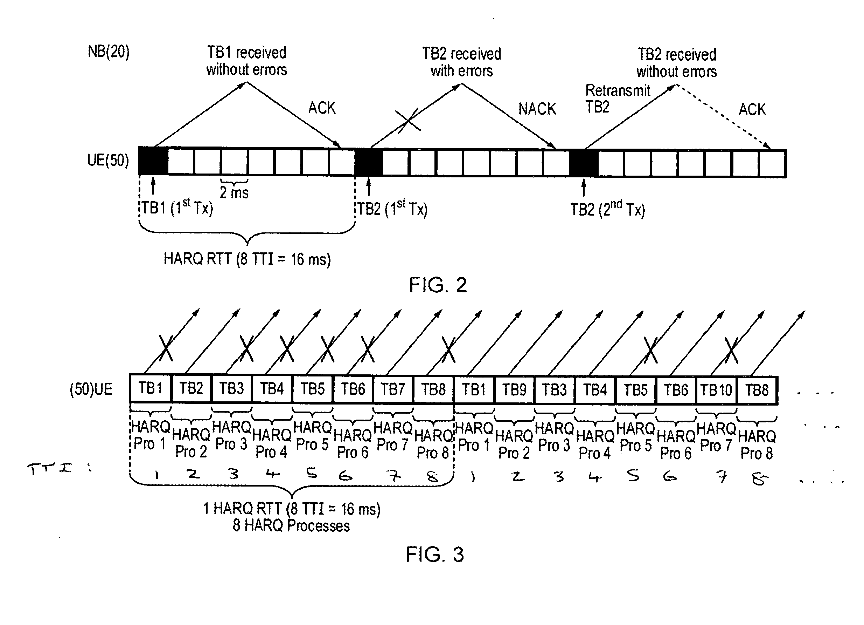

Figure 2 illustrates schematically a data transmission acknowledgement protocol used in a data transmission regime of the wireless telecommunications network 10. In particular, Figure 2 illustrates schematically transmission of a transport block in a data packet from user equipment 50 to base station 20 in a HSUPA network operating in a 2ms TTI regime and the operation of an acknowledgement protocol known as a Hybrid Automatic Repeat Request (HARQ). HARQ enables fast acknowledgement and consequently fast retransmission of a data packet, if required.

In Figure 2, a first data packet TB1 is transmitted from user equipment 50 and successfully received by base station 20. The base station 20, in accordance with the HARQ process, sends an acknowledgement of safe receipt (ACK) of TB1 back to user equipment 50. Figure 2 illustrates a "stop and wait" HARQ protocol in which user equipment 50 waits for acknowledgement of safe receipt of a data packet before sending the next. Since a successful receipt is received in respect of TB1, within a pre-programmed monitoring period, user equipment 50 can transmit a second data packet, TB2. The monitoring period in the case shown in Figure 2 is 8 transmit time intervals, i.e. 16ms.

TB2 is not successfully received at base station 20 and thus the base station 20 generates and sends a negative acknowledgement (NACK). After waiting the pre-programmed monitoring period and having received a NACK, user equipment 50 retransmits TB2, which is then received successfully by the base station 20.

Figure 3 illustrates schematically a data transmission regime using the data transmission acknowledgement protocol of Figure 2. In a HSUPA telecommunications network a synchronous HARQ protocol is used. In such a case, retransmission of a given data packet is expected after a pre-programmed monitoring period. That pre-programmed monitoring period is the time between commencement of two transmissions of the same packet of data and has been set in accordance with a reasonable estimate of operative HARQ round trip time (RTT). The estimate of HARQ round trip time for 2ms TTI and predetermined monitoring period for the 2ms TTI regime has been set at 8TTI (16ms). Whilst waiting for an ACK or NACK from a base station in respect of a given data packet, user equipment can transmit further data packets. The base station can also monitor for successful receipt or otherwise of those data packets.

### HARQ Processes

A data transmission regime using a monitoring period of 16ms is shown. In the case illustrated, eight data packets, labelled as TB1 to TB8 are consecutively transmitted by user equipment 50, one in each 2ms TTI. Each data packet is handled by a HARQ process, labelled as "HARQ Pro1" to "HARQ Pro8". Each HARQ process is associated with one of the eight TTIs within the RTT.

As shown, TB 1, TB3, TB4, TB5, TB6 and TB8 are not successfully received by the base station 20 and they are retransmitted in the next sequence of 8 transmitted data packets in the TTI's shown. Since TB2 and TB7, transmitted in HARQ Pro2 and HARQ Pro7 respectively, are successfully received and acknowledged by base station 20, in the next sequence of 8 transmitted data packets two new data packets TB9 and TB10 respectively, can be transmitted on HARQ Pro 2 and HARQ Pro7.

For a given application (for example, voice data, video data or an FTP process) user equipment 50 and base station 20 are aware, via a look up table, that successful reception of a transmitted data packet of a particular size within a target elapsed time period after first transmission will result in a good service experience by a user. That target elapsed time period will depend upon the application being offered. The target elapsed time period for video or voice, for example, will typically be significantly shorter than the target elapsed time for a data packet relating to a SMS message. The target elapsed time period for a data packet of a given size for a given size of data packet is referred to as "Quality of Service".

User equipment 50 and base station 20 may each have a look up table, giving an initial starting set of parameters within which user equipment 50 can operate for transmission of a data packet, or transport block, of given size for a given application. That look up table is known as a HARQ profile. The HARQ profile specifies a power offset and a number of maximum transmissions (including a first transmission) for a data packet of given size, for a particular application, requiring a particular Quality of Service.

Use of the HARQ protocol in combination with a Quality of Service target allows calculation of some indication of whether user equipment and base station are operating to offer an acceptable level of service to an end user.

As described above, a radio carrier comprises a plurality of channels. A channel upon which data packets are sent from user equipment 50 to a base station 20 relating to user equipment applications (for example, voice, video, SMS) are sent is known as an E-DCH Dedicated Physical Data Channel (E-DPDCH). A channel upon which control information relating to the user equipment is sent is known as an E-DCH Dedicated Physical Control Channel (E-DPCCH).

### Reduced HARQ Process Allocation

Whereas in previous techniques when allocating resources for transmission of data packets over a channel in accordance with the HARQ protocol, user equipment 50 and all serving base stations would have allocated resources to support all possible HARQ processes (in this example, eight HARQ processes per channel for a 2ms TTI having a 16ms RTT), this embodiment enables fewer than all of the HARQ processes to be allocated. In particular, the RNC 40 obtains a maximum bit rate for data transmissions over the channel. This maximum bit rate can be determined from the operator and maintenance (OAM) service profile. In addition, a scheduling priority indicator (SPI) may also be determined from the operator and maintenance service profile. This information may be utilised to inform the number of HARQ processes that may be allocated in the user equipment 50 to support the transmission of that data, as will now be described in more detail.

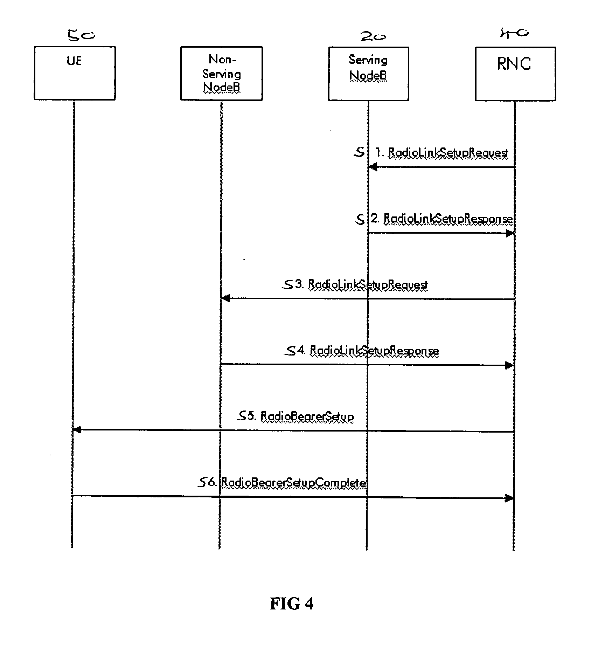

Figure 4 is a message sequence diagram illustrating the interaction between network nodes when allocating HARQ processes.

At step S1, the radio network controller 40 determines the maximum bit rate (MBR) and scheduling priority indicator (SPI) of a radio bearer for the user equipment 50. The radio network controller 40 sends the maximum bit rate and scheduling priority indicator for the radio bearer to the serving base station for the user equipment 50 via a NodeB application part (NBAP) radio link set-up request message.

On receipt of this message, the serving base station will determine whether the radio bearer should have the HARQ process restriction applied. The serving base station does this based on comparing the received scheduling priority indicator value against a predetermined threshold. If all or some of the radio bearers, in accordance with operator policy, are low priority then the HARQ process restriction can be applied according to operator policy. It will be appreciated that applying a HARQ process restriction based on a scheduling priority indicator may be omitted, if required.

If the HARQ process restriction is to be applied, then the serving base station will determine how many HARQ processes are needed in order to match the maximum bit rate given in a NBAP radio link set-up request message. Such a determination may be made either dynamically using an algorithm or may be determined from a look-up table such as that shown in Table 1 below.

**Table 1**

| | Allocated HARQ Processes | 8/8 | 7/8 | 6/8 | 5/8 | 4/8 | 3/8 | 2/8 | 1/8 |
|---|---|---|---|---|---|---|---|---|---|
| 656 mac-d pdu | MBR (kbps) | 345 | 302 | 260 | 216 | 173 | 130 | 87 | 44 |
| 336 mac-d pdu | MBR (kbps) | 177 | 155 | 133 | 111 | 89 | 67 | 45 | 23 |

For example, the serving base station will determine the MAC-d PDU size of the transmissions over the radio bearer. For illustration, consider that the radio bearer is transmitting using a 336 MAC-d PDU. In that case, the serving base station will utilise the lower row from Table 1. Also, consider that, for example, the maximum bit rate indicated by the 3GPP 25.433 R6 section "E-DCH maximum bit rate" information element specifies that a maximum bit rate of 108 kbps is required. Accordingly, the serving base station will determine the minimum number of HARQ processes required to support at least that maximum bit rate. In this example, the serving base station determines from the lower row of Table 1 that the required maximum bit rate is achieved with a minimum of five HARQ processes. It will be appreciated that if the radio bearer was configured to use a different MAC-d PDU size then a different number of HARQ processes would be required (in this example three).

In embodiments, one additional HARQ process may need to be allocated for non-scheduled mode, such as Signalling Radio Bearer (SRB) over E-DCH, VoIP, etc.

At step S2, the serving base station will send the HARQ process details back to the RNC 40 via the "HARQ process allocation for 2 ms TTI" information element in the NBAP radio link set-up response message.

The radio network controller 40 will then inform the remaining serving base stations shown in the active set the HARQ process details via a "HARQ process allocation for 2 ms TTI" information element in the NBAP radio link set-up request message. This provides the appropriate HARQ process information to the non-serving base stations to enable soft combining to occur.

At step S4, when all the NBAP radio links set-up response messages have been received by the radio network controller 40 then the radio network controller 40 will inform the user equipment 50.

Accordingly, at step S5 the radio network controller 40 will inform the user equipment 50 of the HARQ processes allocated via a Radio Resource Control (RRC) "2ms scheduled transmission grant HARQ process allocation" information element in a RRC radio bearer set-up message.

At step S6, the procedure completes on reception of a RRC radio bearer set-up complete message.

Thereafter, the user equipment 50 will transmit data over the channel using the allocated number of HARQ processes.

Continuing the example mentioned above, the user equipment 50 will transmit using five of the eight available HARQ processes. In addition, a further one HARQ process may also be allocated for non-schedule mode transmissions. It will be appreciated that any five of the eight HARQ processes may be allocated, as required. Given that each HARQ process may be associated with a designated TTI, then the corresponding HARQ processes in all base stations within the active set will also be monitoring that TTI which enables reliable data transmission to occur.

Hence, only resources required to support five (or six) HARQ processes are allocated within the user equipment 50. It will be appreciated that this reduces the amount of resources required to be allocated within the user equipment 50. Likewise, each of the base stations within the active set will allocate resources required to support five (or six) HARQ processes rather than eight. In this way, when duplicated across multiple radio bearers of multiple user equipment served by multiple base stations, the total amount of resources required to be allocated, but potentially never used, may be significantly reduced. Furthermore, any interference assumptions can be greatly reduced since a less pessimistic view on the likely amount of interference that may occur may be made.

As further requests for further transmissions to be made or for transmissions to cease or for changes in the maximum bit rate or schedule priority indicator for existing transmissions are made, the number of allocated HARQ processes may be adjusted accordingly.

It will be appreciated, therefore, that by using this approach an increase in cell user capacity may be achieved. Also, this approach enables the maximum bit rate to be reduced to that below the maximum bit rate for all HARQ processes without the call dropping. This enables the maximum bit rate to be set below 345 kbps for a 656 MAC-d PDU size or 177 kbps for a 336 MAC-d PDU size. This allows an increase in user equipment capacity and a reduction in uplink load. Furthermore, this approach enables operators to increase user capacity in their network in order to increase revenue and to reduce the throughput of lower priority users associated with lower service level agreements.

Although the above example has been described with reference to a 2 ms TTI, it will be appreciated that the same approach can be applied to other TTIs and for other RTT intervals.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of transmitting data packets between network nodes in a wireless telecommunications network utilising an acknowledge request protocol in which consecutive transmission time intervals are provided for transmission of data packets, a plurality of said consecutive transmission time intervals forming a round trip time period, retransmission of a data packet occurring if an indication that a data packet was corrupted is received within said round trip time period, said acknowledge request protocol employing up to a predetermined number of acknowledgement request processes supporting transmission of data packets, each acknowledgement request process having an associated transmission time interval within which to transmit a data packet, said method comprising the steps of:
determining a transmission requirement associated with said data packets: and
allocating fewer than said predetermined number of said acknowledgement request processes in response to said transmission requirement to selectively prevent transmission time intervals within said round trip time period associated with non-allocated acknowledgement request processes from being allocated to support transmission of said data packets over said data channel.

2. The method of claim 1, wherein said step of allocating comprises:
allocating fewer than said predetermined number of said acknowledgement request processes in response to said transmission requirement to prevent at least one of said consecutive transmission time intervals within said round trip time period being allocated to support transmission of said data packets over said data channel.

3. The method of claim 1 or 2, wherein said round trip time period comprises 'n' consecutive transmission time intervals and said step of allocating comprises:
allocating no more than 'n-1' acknowledgement request processes in response to said transmission requirement provide no transmission on at least one of said 'n' transmission time intervals of said round trip time period.

4. The method of any preceding claim, wherein said round trip time period remains unchanged when allocating fewer than said predetermined number of said acknowledgement request processes.

5. The method of any preceding claim, wherein said transmission requirement comprises a maximum bit rate for transmission of said data packets and said step of allocating comprises:
allocating a number of said acknowledgement request processes determined to support transmission of said data packets over said data channel with at least said maximum bit rate.

6. The method of any preceding claim, wherein said predetermined number of acknowledgement request processes comprises 'n' acknowledgement request processes operable to support a combined maximum bit rate 'm', each acknowledgement request process contributing 'm/n' of said combined maximum bit rate and step of allocating comprises:
allocating a number of said acknowledgement request processes to support transmission determined to be that minimum integer number of acknowledgement request processes having a cumulative maximum bit rate greater or equal to said maximum bit rate.

7. The method of any preceding claim, wherein said step of allocating comprises:
allocating said acknowledgement request processes in at least one of user equipment, a radio network controller, a serving base station and non-serving base stations in an active set.

8. The method of any preceding claim, wherein said acknowledge request protocol comprises one of a hybrid acknowledge request protocol and a simultaneous hybrid acknowledge request protocol.

9. A computer program product operable, when executed on a computer, to perform the method steps of any one of claims 1 to 8.

10. A network node operable to transmit data packets other network nodes in a wireless telecommunications network utilising an acknowledge request protocol in which consecutive transmission time intervals are provided for transmission of data packets, a plurality of said consecutive transmission time intervals forming a round trip time period, retransmission of a data packet occurring if an indication that a data packet was corrupted is received within said round trip time period, said acknowledge request protocol employing up to a predetermined number of acknowledgement request processes supporting transmission of data packets, each acknowledgement request process having an associated transmission time interval within which to transmit a data packet, said network node comprising:
determining logic operable to determining a transmission requirement associated with said data packets; and
allocation logic operable to allocate fewer than said predetermined number of said acknowledgement request processes in response to said transmission requirement to selectively prevent transmission time intervals within said round trip time period associated with non-allocated acknowledgement request processes from being allocated to support transmission of said data packets over said data channel.

11. The network node of claim 10, wherein said allocation logic is operable to allocate less than said predetermined number of said acknowledgement request processes in response to said transmission requirement to prevent at least one of said consecutive transmission time intervals within said round trip time period being allocated to support transmission of said data packets over said data channel.

12. The network node of claim 10 or 11, wherein said round trip time period comprises 'n' consecutive transmission time intervals and said allocation logic is operable to allocate no more than 'n-1' acknowledgement request processes in response to said transmission requirement provide no transmission on at least one of said 'n' transmission time intervals of said round trip time period.

13. The network node of any one of claims 10 to 12, wherein said round trip time period remains unchanged when allocating fewer than said predetermined number of said acknowledgement request processes.

14. The network node of any one of claims 10 to 13, wherein said transmission requirement comprises a maximum bit rate for transmission of said data packets and said allocation logic is operable to allocate a number of said acknowledgement request processes determined to support transmission of said data packets over said data channel with at least said maximum bit rate.

15. The network node of any one of claims 10 to 14, wherein said predetermined number of acknowledgement request processes comprises 'n' acknowledgement request processes operable to support a combined maximum bit rate 'm', each acknowledgement request processes contributing 'm/n' of said combined maximum bit rate and said allocation logic is operable to allocate a number of said acknowledgement request processes to support transmission determined to be that minimum integer number of acknowledgement request processes having a cumulative maximum bit rate greater or equal to said maximum bit rate.
